# EUROPEAN PATENT APPLICATION

(11) **EP 1 469 630 A1**
(43) Date of publication of application: **20.10.2004**
(21) Application number: 03360048.7
(22) Date of filing: 14.04.2003
(51) Int. Cl.: H04L 7/033

(54) **Self-aligned clock and data recovery circuit**

(71) Applicant: ALCATEL, 75008 Paris (FR)
(72) Inventor: Lautenschläger, Wolfram, 74343 Sachsenheim (DE)
(74) Representative: KOHLER SCHMID + PARTNER

(57) **Abstract**

A clock and data recovery (=CDR) circuit (3) for detecting the bit phase of an incoming data signal (1) and generating an outgoing sampled data signal (9), comprising a phase detector and a local clock, wherein the outgoing sampled data signal (9) is generated by retiming the incoming data bits in the rhythm of the local clock, wherein the local clock is adjusted to the bit phase of the incoming data signal (1) detected by the phase detector, is characterized in that the phase detector comprises means for performing a short time cross correlation between the incoming data signal and the sampled data signal. This CDR circuit (3) can be operated at very high bit rates and with few adjustment efforts.

## Description

The invention relates to a clock and data recovery (=CDR) circuit for detecting the bit phase of an incoming data signal and generating an outgoing sampled data signal, comprising a phase detector and a local clock, wherein the outgoing sampled data signal is generated by retiming the incoming data bits in the rhythm of the local clock, wherein the local clock is adjusted to the bit phase of the incoming data signal detected by the phase detector.

A CDR circuit of this type is disclosed in M. Wurzer et al., IEEE Journal of solid state circuits, Vol. 34, No. 9, Sept. 1999, page 1320-1324.

Clock and data recovery (=CDR) circuits are key electronic components in optical broadband communication systems, e.g. in time division multiplexing (TDM) systems. The task of the CDR circuit is to detect the bit phase of an incoming data signal and adjust it to a local clock, thus introducing a phase shift to a recovered data signal compared to the incoming data signal.

Optical transmission systems operating at high bit rates such as 40 Gbit/s require the CDR circuit to operate at speeds close to the absolute speed limit of active elements, and time delays in active elements and wires are no more negligible relative to a bit period. For these reasons, standard CDR solutions containing feed back loops at bit rate level, oversampling, switching inside a bit frame or synchronized parallel processing are inapplicable.

A CDR circuit suitable for current optical transmission systems is described by M. Wurzer, see above. An input data signal is fed into two D-flip-flops (DFFs) in parallel, wherein the output signals of the two DFFs are fed into a XOR gate. The XOR gate signal is led through a low pass filter and fed into a voltage controlled oscillator (VCO) element generating a clock signal. One of the DFFs is fed with this clock signal directly, the other DFF is fed with the clock signal delayed by 90°. The in-phase DFF provides the recovered data signal, while the out of phase DFF samples on the transition between two bits and thus serves as an early-late detection: If the clock is too early, it samples still the same bit as the in-phase DFF, else, i.e. if the clock is too late, it samples the next bit. At any transition between two bits the XOR of both output signals delivers the correct early-late information for a phase locked loop (PLL).

A disadvantage of this known CDR circuit is that the XOR gate delivers a false early signal in case of no transition between bits, i.e. in case of a series of equal bits. In case of well scrambled input data signals with a constant density of transitions (i.e. with a constant average number of transitions in the data stream), this can be overcome by applying a low pass filter and subtracting a constant DC shift from the signal of the XOR gate. However, in burst mode systems the time constants are too short for averaging and subtraction of false early signals, and the CDR circuit of Wurzer et al. cannot be applied. Also, the low pass filtering complicates the lock-in of the PLL, and additional lock-in aids are required.

Also disadvantageous in Wurzer's CDR circuit is that the phase information is mainly included in the out-of phase signal, whereas the in-phase signal serves as a reference only. The in-phase signal path, which is responsible for the correct data resampling, is not directly controlled by the PLL. The correct operation of the PLL depends on the correct fit of data delay times and the correct 90° phase shift. A good accuracy of these adjustments is difficult to obtain, in particular at higher bit rates.

It is the object of the invention to introduce a CDR circuit which may be operated at very high bit rates and with less adjustment efforts.

This object is achieved by a CDR circuit as introduced in the beginning which is characterized in that the phase detector comprises means for performing a short time cross correlation between the incoming data signal and the sampled data signal.

The short time cross correlation is used as a source of information about the phase shift between the incoming (input) data signal and the outgoing (output) sampled data signal. The sampled data signal is controlled such that a certain, fixed cross correlation value between the input data signal and the outgoing sampled data signal is maintained. Particularly preferred is to choose the cross correlation value to be maintained as half of the maximum cross correlation value. In this case, deviations from the cross correlation value to be maintained (target value) are linear with the phase shift error to be compensated over a broad range.

The short time cross correlation determines the cross correlation by averaging a limited number of bit periods, typically on the order of 1000.

In a preferred embodiment of the inventive CDR circuit, the phase detector comprises two signal paths, wherein the two signal paths are fed into a multiplier element multiplying both signals. The first signal path is used for handling the sampled data signal, and the second signal path is used for handling the input data signal. The multiplier element is a standard element for generating the short cross correlation of two signals.

In a preferred development of this embodiment, a first signal path comprises a decision element (=DFF) controlled by the local clock. The decision element, or D-flip-flop, is fed with the input data signal, and the clock provides the sampling points for switching the output level of the DFF from its former level to the signal level at the input of the DFF. The output signal of the DFF is the sampled data signal; it is fed into the multiplier and to the output of the CDR circuit. Thus, data sampling and phase discrimination are done with the same one decision element. There is no need for synchronization of a plurality of DFFs, so the DFF is self-aligning. Moreover, there is no plurality of clock input signals which need to be phase aligned, but there is only one single clock input.

In another development of the embodiment above, the second signal path comprises a delay element. This allows choosing a particular position in the cross correlation function, e.g. the falling edge with a one bit period delay, while still having a degree of freedom for the phase shift between input data signal and sampled data signal.

A further development of the embodiment above is characterized in that the phase detector comprises a derivation element, transforming a fed signal into its derivative, wherein the derivation element is located either in the first signal path, in particular subsequent to a decision element controlled by the local clock, or in the second signal path, in particular subsequent to a delay element. When using the derivative of the cross-correlation function by inserting a derivation element into one of the signal paths, and when controlling the sampled data signal such that the (now differentiated) cross correlation function is at zero level, then the the "false early problem" is not present. When the clock is in phase, the phase detector provides a zero signal. When the input data signal is constant (e.g. zero) over a longer time period, then the phase detector provides a zero signal, too, and the current phase shift is maintained. A CDR circuit of this type is therefore applicable to fast acquisition PLLs as required in burst mode systems. In the inventive embodiment including a derivation element, the multiplier element can determine the cross correlation function by performing a time averaging over only about 100 bit periods.

In a preferred embodiment of the inventive CDR circuit, the CDR circuit comprises a loop filter. The loop filter transmits low frequency parts and eliminates higher frequency parts of the correlation signal, thus easing the "false early problem" if necessary, and filtering out distorting parts of the input or sampled data signals.

In an equally preferred embodiment, the CDR circuit comprises a voltage controlled oscillator (=VCO). This is the standard element for converting a phase discriminator signal into a clock signal.

The invention is also realized by a network multiplexer element comprising an input/output circuit which comprises an inventive CDR circuit as described above. In a Gigabit network multiplexer, the advantages of the invention are particularly usable.

Also within the scope of the invention is a method for operating an inventive CDR circuit as described above, characterized in that the phase detector obtains phase information by using the short time cross correlation between the incoming data signal and the sampled data signal.

Finally, the invention is also realized by a software program for performing the inventive method mentioned above.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

The invention is described in the drawings.
- Fig. 1: shows the basic principle of an inventive self aligned CDR circuit;
- Fig. 2: shows a timing diagram of an inventive self aligned CDR circuit;
- Fig. 3: shows a cross correlation function for the signals of Fig. 2, as a function of a time delay tau;
- Fig. 4a: shows an embodiment of an inventive self aligned CDR circuit without a delay element;
- Fig. 4b: shows an embodiment of an inventive self aligned CDR circuit without a one bit period delay element;
- Fig. 5a: shown an embodiment of an inventive self aligned CDR circuit with a derivation element in the second signal path;
- Fig. 5b: shown an embodiment of an inventive self aligned CDR circuit with a derivation element in the first signal path;
- Fig. 6: shows an experimental phase discriminator function obtained with the embodiment of Fig. 5a;
- Fig. 7: shows an embodiment of the inventive CDR circuit including a PLL.

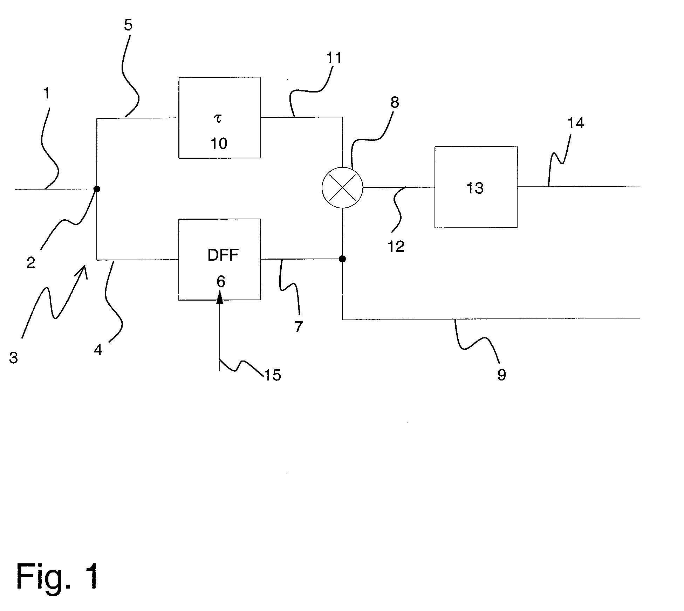

**Fig. 1** shows the basic principle of an inventive self-aligned CRD circuit in accordance with the invention. An incoming data signal (input data signal) 1 is fed into an input 2 of the CRD circuit 3. The input data signal 1 is spread to two signal paths 4, 5.

The lower, first signal path 4 leads into an input of a decision element 6. The decision element 6 is a D-flip-flop. A part of an output signal 7 of the decision element 6 is fed into a multiplier element 8. The other part of the output signal 7 of the decision element 6 is fed as an outgoing (output) sampled data signal 9 to the output of the CDR circuit 3.

The upper, second signal path 5 leads into a delay element 10, delaying the input data signal 1 by a time period tau, e.g. with tau equal to half a bit period T/2. The delayed input data signal 11 is fed into the multiplier element 8.

The multiplier element 8 generates a signal 12 with a DC level that is proportional to the correlation between the output signal 7 of the decision element 6 and the delayed input data signal 11. The multiplier output 12 is subsequently filtered in a filter 13, typically a low pass filter. The filtered signal 14 is a short time average of the multiplier output and thus a short time estimate of the correlation. The filtered signal 14 is also named the phase discriminator signal. The phase detector or phase discriminator of the CDR circuit 3 basically comprises the decision element 6 and the multiplier element 8.

The phase discriminator signal is used to drive a local clock. The local clock gives pulses at a regular time separation to a local clock input 15 of the decision element 6. The frequency of the pulses of the local clock is controlled by the phase discriminator signal, thus implementing a feed back loop. If the phase discriminator signal deviates from the value to be maintained (target value), then the local clock reacts and adjusts its frequency appropriately.

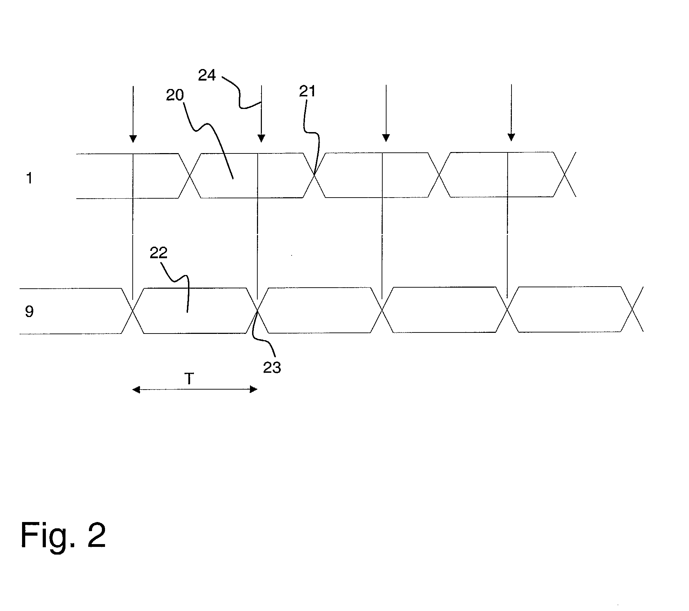

**Figure 2** illustrates the timing correlation between the input data signal 1, top, and the outgoing sampled data signal 9, bottom.

The input data signal 1 consists of data bits 20 of high or low value, corresponding to an information content 1 or 0, separated by transition points 21. The data bits 20 run in from the left and propagate to the right with the pass of time. One data bit has a length or time duration of T.

The sampled output data signal 9 is generated by a decision element. It also consists of data bits 22 separated by transition points 23.

At a sampling point 24, the decision element reads out the value of the input data signal 1 and switches the output data signal 9 to that value. I.e. the information content of data bit 20 of the input data signal 1 is projected into the data bit 22 of sampled output data signal 9.

The time period between the transition point 21 and the sampling point 24 determines the time delay between corresponding data bits of the input data signal 1 and the sampled output data signal 9. The time position of the sampling point 24, in turn, is determined by the local clock. By means of the invention, the position of the sampling points relative to the input data signal 1 is self aligning, in particular to the center of the data bits 20 as shown in Fig. 2.

A self alignment of the sampling points 24 to the center of the data bits 20 can be obtained e.g. by controlling the short time cross correlation of the undelayed input data signal 1 and the sampled output data signal 9 such that the half maximum cross correlation value is maintained, or by controlling the short time cross correlation of the input data signal 1 delayed by T/2 and the sampled output data signal 9 such that the maximum cross correlation value is maintained.

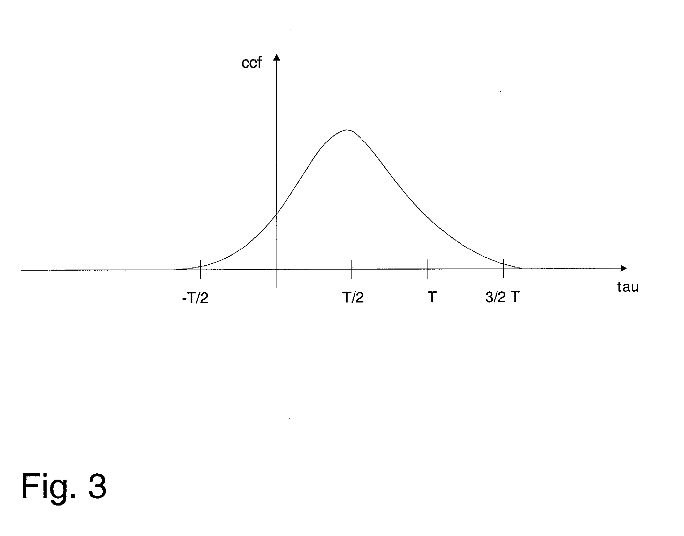

**Fig. 3** shows a diagram of the cross correlation function ccf of the input data signal and the sampled output data signal, assuming that the sampling points are located at the centers of data bits of the input data signal as shown in Fig. 2, as a function of a time delay tau to which the input data signal is subjected before performing the cross correlation.

When the time delay tau equals half a bit period T/2, then the delayed input data signal and the sampled output data signal are in phase, resulting in a maximum cross correlation.

If tau is zero, then one bit position of the two half bits of the input data signal within one bit period T (separated by two neighboring sampling points in Fig. 2) is identical with the bit position of the sampled output data signal, compare Fig. 2. The other half bit of the input data signal is uncorrelated, resulting in about half the maximum cross correlation value, in the middle of the rising (left) edge of the cross correlation function ccf.

If tau is larger than 3/2 T or smaller than -T/2, then the cross correlation is entirely performed among uncorrelated bits, resulting in a zero cross correlation.

Preferably, the feedback control of the local clock and therewith the sampling are not performed with the maximum value of the cross correlation function. At the maximum, a deviation from the maximum cross correlation value leaves open whether the clock is slow or fast. If the feedback control is done by maintaining a correlation value at an edge (slope) of the cross correlation function, then the deviation from the correlation value to be maintained directly indicates the type of the clock error. Alternatively, the analysis of the cross correlation function can be performed after a derivation, when the maximum has been transformed into a zero-crossing.

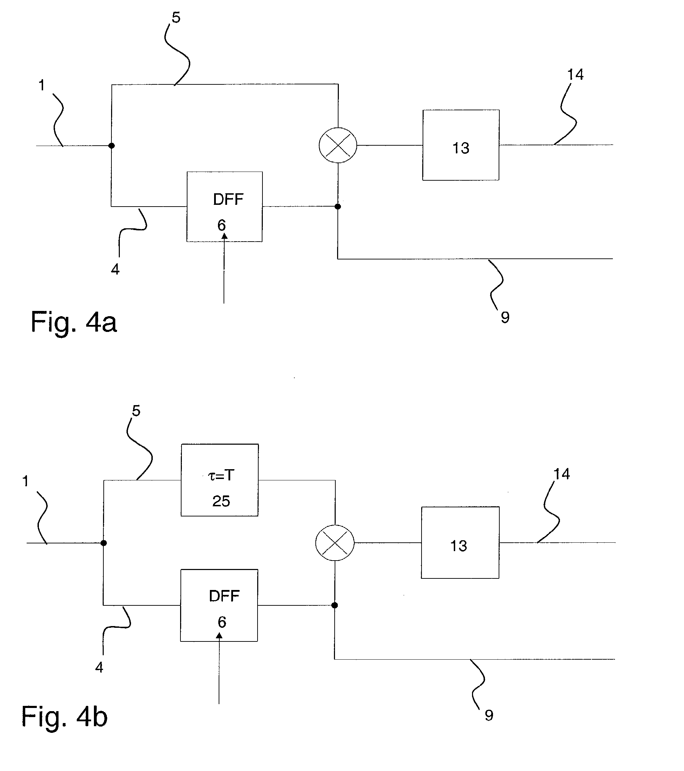

In **Fig. 4a**, an embodiment of an inventive CDR circuit is shown. It is basically the same CDR circuit as shown in Fig. 1, but with a zero time delay of the input data signal 1 in the second signal path 5. The CDR circuit of Fig. 4a uses the raising (in Fig. 3 left) edge or slope of the cross correlation function: the filtered cross correlation signal 14 which is used to drive the local clock is fed into a feedback loop. If the cross correlation signal has its target value of about half the maximum value of the cross correlation function, at the point of intersection of the cross correlation function with the axis at tau=0 in Fig. 3, then the local clock oscillates at the desired frequency of the input data signal and in the desired phase. If the registered cross correlation signal is lower than the target value, then the local clock is late. The frequency of the local clock must be increased then, preferably to an extent proportional to the deviation of the cross correlation signal from the target value. If the registered cross correlation signal is larger than the target value, then the clock is early, and the frequency of the local clock must be reduced then. Note that through a temporal shift of the frequency of the local clock, the phase position of the sampled signal is adjusted.

A drawback of this approach is that in case of a long series of equal bits in the input data signal 1, the cross correlation function gives a high value irrespective of the phase shift, what causes a "false early signal" and thus a loss of the phase during such a long series.

In **Fig. 4b**, an alternative embodiment of an inventive CDR circuit is shown. It is basically the same CDR circuit as shown in Fig. 1, but with a delay element 25 for a time delay of one bit period T of the input data signal 1 in the second signal path 5. The CDR circuit of Fig. 4b uses the falling (in Fig. 3 right) edge of the cross correlation function.

If the cross correlation signal has its target value of about half the maximum value of the cross correlation function, at the tau position of 1 T in Fig. 3, then the local clock oscillates at the desired frequency of the input data signal 1 and at the desired phase position. If the registered cross correlation signal is lower than the target value, then the local clock is early; if the registered cross correlation signal is larger than the target value, then the clock is late.

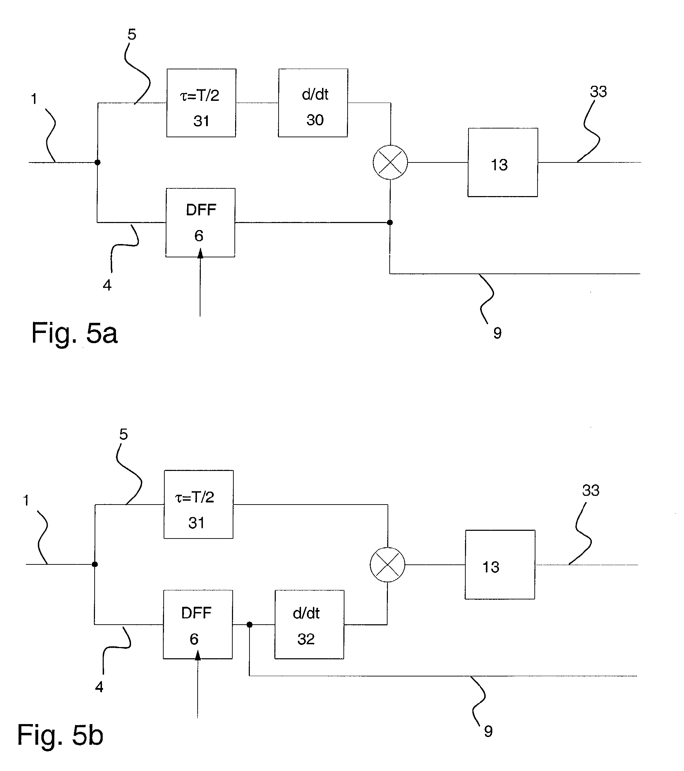

In **Fig. 5a**, another embodiment of the inventive CDR circuit is shown. It is identical with the CDR circuit of Fig. 1, but has a derivation element 30 in the upper, second signal path 5, subsequent to a delay element 31 delaying the input data signal 1 by half a bit period T/2. As known from function theory, the derivative of the cross correlation function equals the cross correlation function with one of the input signals derivated, see e.g. F. H. Lange, Signale und Systeme, Band 3 Regellose Vorgänge, VEB Verlag Technik Berlin 1973. Therefore, the derivation element 30 transforms the cross correlation function into its derivative. The same effect can be achieved by positioning a derivative element 32 not in the second signal path, but in the first signal path 4, subsequent to the decision element 6, see **Fig. 5b**.

The maximum of the cross correlation function in Fig. 3 is thus transformed into a zero crossing of the differentiated cross correlation signal 33 which is used for phase discrimination.

When controlling the local clock in a feedback loop such that the zero value of the differentiated cross correlation signal 33 is maintained as a target value, then early and late clock signals can be distinguished between easily, and corresponding frequency adjustments can be made. The advantage of this approach, compared to the approach of e.g. Fig. 4a, is that there is no "false early signal" in case of a long series of equal bits. A long series of equal bits will simply give a zero value of the differentiated cross correlation signal 33, what leaves the current local clock frequency (and thus the phase shift) unchanged. The approaches of Figs. 5a and 5b are particularly suitable for fast acquisition PLLs as required in burst mode systems.

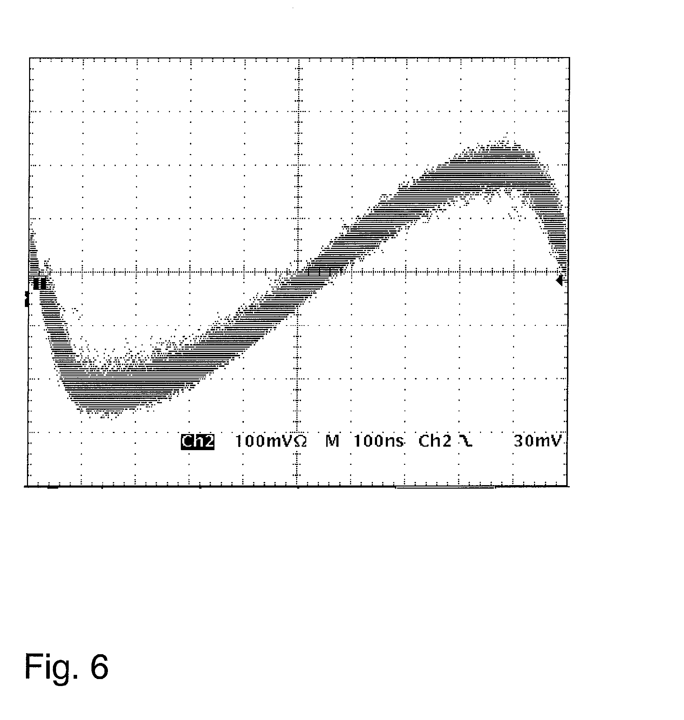

An experimental differentiated cross correlation signal of a CDR circuit according to Fig. 5a is shown in **Fig. 6.** The input data signal was a PRBS 2³¹-1 modulated 10 Gbit/s stream. The local sampling clock had been frequency shifted intentionally by 1 MHz relative to the data rate to get a periodic phase sweep over the full bit length.

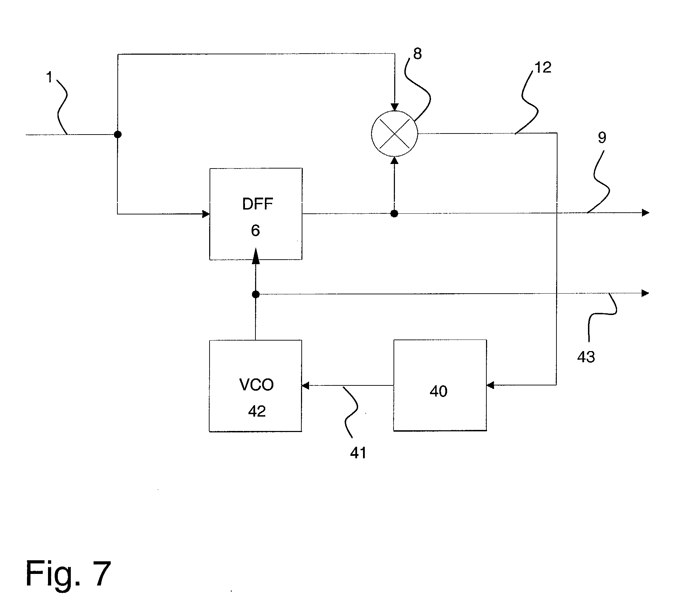

In **Fig. 7**, an embodiment of an inventive CDR circuit, including a complete phase locked loop (PLL) is shown. Based on a CDR circuit of Fig. 4a, the cross correlation signal 12 is fed into a loop filter 40, which is basically a low pass filter, taking out distortions originating from the original input data signal as well as undesired false early signal influences. The filtered cross correlation signal 41 is fed into a voltage controlled oscillator (=VCO) 42. The VCO 42 generates electric pulses at an adjustable frequency, also called local clock signal or recovered clock signal 43. This adjustable frequency is dependent on a voltage which in turn is influenced and feedback-controlled by the filtered cross correlation signal 41.

## Claims

1. Clock and data recovery (=CDR) circuit (3) for detecting the bit phase of an incoming data signal (1) and generating an outgoing sampled data signal (9), comprising a phase detector and a local clock, wherein the outgoing sampled data signal (9) is generated by retiming the incoming data bits in the rhythm of the local clock, wherein the local clock is adjusted to the bit phase of the incoming data signal (1) detected by the phase detector,
**characterized in that**
the phase detector comprises means for performing a short time cross correlation between the incoming data signal and the sampled data signal.

2. CDR circuit (3) according to claim 1, **characterized in that** the phase detector comprises two signal paths (4, 5), wherein the two signal paths (4, 5) are fed into a multiplier element (8) multiplying both signals.

3. CDR circuit (3) according to claim 2, **characterized in that** a first signal path (4) comprises a decision element (=DFF) (6) controlled by the local clock.

4. CDR circuit (3) according to claim 2, **characterized in that** a second signal path (5) comprises a delay element (10; 25; 31).

5. CDR circuit (3) according to claim 2, **characterized in that** the phase detector comprises a derivation element (30, 32), transforming a fed signal into its derivative, wherein the derivation element (30, 32) is located either in the first signal path (4), in particular subsequent to a decision element (6) controlled by the local clock, or in the second signal path (5), in particular subsequent to a delay element (31).

6. CDR circuit (3) according to claim 1, **characterized in that** the CDR circuit comprises a loop filter (40).

7. CDR circuit (3) according to claim 1, **characterized in that** the CDR circuit comprises a voltage controlled oscillator (=VCO) (42).

8. A network multiplexer element comprising an input/output circuit which comprises a CDR circuit (3) according to claim 1.

9. Method for operating a CDR circuit (3) according to claim 1, **characterized in that** the phase detector obtains phase information by using the short time cross correlation between the incoming data signal (1) and the sampled data signal (9).

10. Software program for performing a method according to claim 9.
